# EUROPÄISCHE PATENTSCHRIFT

(11) **EP 0 531 869 B1**
(45) Veröffentlichungstag und Bekanntmachung des Hinweises auf die Patenterteilung: **08.01.1997**
(21) Anmeldenummer: 92114928.2
(22) Anmeldetag: 01.09.1992
(51) Int. Cl.: H01L 31/042, E04F 13/08

(54) **Montageklemme**
Mounting clamp
Pince de montage

(30) Priorität: 11.09.1991 DE 4130214
(43) Veröffentlichungstag der Anmeldung: 17.03.1993
(73) Patentinhaber: SIEMENS SOLAR GmbH, 80807 München (DE)
(72) Erfinder: Perkonigg, Erwin, W-8000 München 40 (DE); Riermeier, Manfred, W-8059 Oberneuching (DE)
(74) Vertreter: Zangs, Rainer E., Dipl.-Ing.

(56) Entgegenhaltungen:
- DE-A- 2 431 435
- US-A- 4 314 429
- PATENT ABSTRACTS OF JAPAN vol. 15, no. 464 (E-1137) 25. November 1991 ; & JP-A-03 200 377

## Beschreibung

Die Erfindung betrifft eine Montageklemme zur Befestigung plattenförmiger Körper auf einer Unterlage sowie ein Verfahren zur Befestigung flacher plattenförmiger Körper auf einer Unterlage mit Hilfe einer Montageklemme.

Zur Befestigung flacher plattenförmiger Körper bieten sich in Abhängigkeit vom Material der Körper vielerlei Möglichkeiten an. Holzwerkstoffe und ähnliche Materialien erlauben die direkte Befestigung mittels Schrauben oder Nägeln oder auch mit Hilfe von speziellen Befestigungselementen.

Spröde Werkstoffe wie Glas oder Keramik werden vorzugsweise geklebt oder mit Hilfe von Klemmen an Wänden und dergleichen befestigt.

Ein Einschubprofil zur Befestigung von plattenförmigen Wetterschutzverkleidungen an Fassaden ist aus der DE-A-24 31 435 bekannt. Dieses weist über einer Bodenplatte zwei sich in entgegengesetzter Richtung öffnende Einschuböffnungen auf.

Aufgabe der Erfindung ist es, eine Montageklemme für plattenförmige Körper aus insbesondere sprödem und empfindlichem Werkstoff anzugeben, die eine einfache, schnelle, feste und gleichzeitig reversible Befestigung von mehreren Körpern in überlappender Anordnung nebeneinander erlaubt, die einfach herzustellen ist und insbesondere zur Befestigung von Solarmodulen geeignet ist.

Diese Aufgabe wird erfindungsgemäß gelöst durch eine Montageklemme, die die Merkmale von Anspruch 1 aufweist.

Weitere Ausgestaltungen der Erfindung sowie eine Verwendung zur Befestigung von Solarmodulen mit Hilfe der Montageklemme sind den Unteransprüchen zu entnehmen.

Die erfindungsgemäße Montageklemme weist nach zwei entgegengesetzten Seiten sich öffnende U-förmige Profile auf, in die die Körper bei der Montage eingesteckt werden. Da die beiden U übereinanderliegen und einen gemeinsamen Mittelschenkel aufweisen, wird bei vollständigem Einstecken der Körper in die U-förmigen Profile eine Überlappung der Körper an den Rändern erzielt.

Die beiden U weisen die gleiche Höhe h und gemessen am jeweils oberen Schenkel die gleiche Tiefe t auf. Somit wird gewährleistet, daß die Überlappung des im oberen U steckenden Körpers durch den oberen Schenkel des oberen U gleich der Einstecktiefe des benachbarten Körpers in das untere U ist. So wird eine gleichmäßig überlappende Anordnung mehrerer Körper nebeneinander möglich.

Ein weiteres funktionelles Teil neben den beiden U stellt die Bodenplatte dar. Diese ist in bestimmtem Abstand zum unteren U angeordnet. Dadurch wird eine Befestigung der Körper in entsprechendem Abstand von der Unterlage möglich. Dieser Zwischenraum kann eine notwendige Hinterlüftung zwischen Körpern und Unterlage bewerkstelligen oder kann ganz einfach den nötigen Freiraum für ein Durchbiegen der Körper bereitstellen, wenn dabei ein Kontakt mit der Unterlage vermieden werden soll.

Die erfindungsgemäße Montageklemme wird durch Verbiegen entsprechender Stahlbleche hergestellt. Aus fertigungstechnischen Gründen ist es von besonderem Vorteil, den untersten Schenkel des zweifach U-förmigen Profils noch einmal U-förmig abzubiegen und schließlich in die Bodenplatte auslaufen zu lassen. Dadurch können die Montageklemmen in einfacher Weise durch Pressen eines Stahlblechs mittels eines Stempels gegen eine entsprechende Form erzeugt werden.

Höhe und Tiefe der U-förmigen Vertiefungen im Profil richten sich nach den zu befestigenden Körpern. In ähnlicher Weise bemißt sich die Länge der Montageklemmen nach der geforderten Festigkeit der montierten Anordnung und letztlich nach dem Gewicht der zu befestigenden Körper. Es ist jedoch auch möglich, anstelle einer längeren mehrere kurze Montageklemmen zur Befestigung eines Körpers zu verwenden. Die Befestigung der Montageklemme auf der Unterlage erfolgt durch geeignete Befestigungsmittel durch die Bohrung in der Bodenplatte hindurch und kann durch Verschrauben, Nageln oder dergleichen mehr vorgenommen werden.

Mit Hilfe der Montageklemme ist es möglich, die Körper in schindelartig überlappender Anordnung auf einer Unterlage zu befestigen. Als weitere Möglichkeit können die Körper alternierend in den Klemmen befestigt werden. Dabei wird ein Körper an einander gegenüberliegenden Kanten von Montageklemmen auf der gleichen Ebene gehalten, beispielsweise im jeweils unteren U. Auf beiden Seiten wird jeweils ein weiterer Körper in die noch "freien" oberen U's der Montageklemmen eingesteckt, während die übernächsten Körper wieder mit Hilfe der unteren U-förmigen Profile gehalten werden.

Die schindelförmige Anordnung kann insbesondere im Außenbereich auf zur Horizontalen geneigten Unterlagen von Vorteil sein, weil dabei dachziegelartig die jeweilige Oberkante eines Körpers von der Unterkante des darüberliegenden Körpers überlappt und somit geschützt wird.

Ein Verfahren zur Befestigung solcher flacher plattenförmiger Körper auf einer Unterlage weist folgende Schritte auf:
a) Befestigen einer Montageklemme mit zweifach U-förmigem Profil auf der Unterlage an einem Ende einer für die Montage vorgesehenen Bahn dergestalt, daß sich das obere U in Montagerichtung öffnet,
b) Einschieben der Kante eines Körpers in das obere U der Montageklemme,
c) Einschieben der gegenüberliegenden Kante des ersten Körpers in das untere U einer weiteren Montageklemme,
d) Befestigen dieser Klemme auf der Unterlage und
e) mehrfache Wiederholung der Verfahrensschritte b) und c) und d) mit weiteren Körpern und Montageklemmen, bis die Bahn vollständig schindelförmig mit Körpern belegt ist.

In besonders vorteilhafter Weise können mit besagtem Verfahren und besagten Montageklemmen rahmenlose Solarmodule im Freien auf geneigten bis senkrechten Unterlagen befestigt werden.

Bei sprödem und nicht elastischem Material der Körper, insbesondere bei rahmenlosen Solarmodulen, können diese mit Hilfe zusätzlicher Mittel in den U-förmigen Profilen fixiert werden. Vorzugsweise wird dazu ein elastisches Teil zwischen Kanten und Profil eingeklemmt, wozu insbesondere ein am inneren Umfang eines U's anliegendes Gummiband verwendet wird. Zum leichteren Einstecken und gleichzeitig besserem Fixieren der Körper in die bzw. in der Montageklemme weist dieses elastische Teil, insbesondere das Gummiband an seiner Oberfläche ein Profil auf, welches dem Einschieben der Kanten der Körper in die Montageklemme einen geringen, dem Herausziehen jedoch einen hohen Widerstand entgegensetzt.

Im folgenden wird die Erfindung anhand von vier Figuren näher erläutert. Dabei zeigen
- Figuren 1: eine Montageklemme die nicht der Erfindung entspricht
- Figur 2: eine Montageklemme gemäß der Erfindung,
- Figur 3: eine Befestigungsmöglichkeit von Solarmodulen mit Hilfe der Montageklemmen, während
- Figur 4: ein als Gummiband ausgebildetes elastisches Teil zeigt.

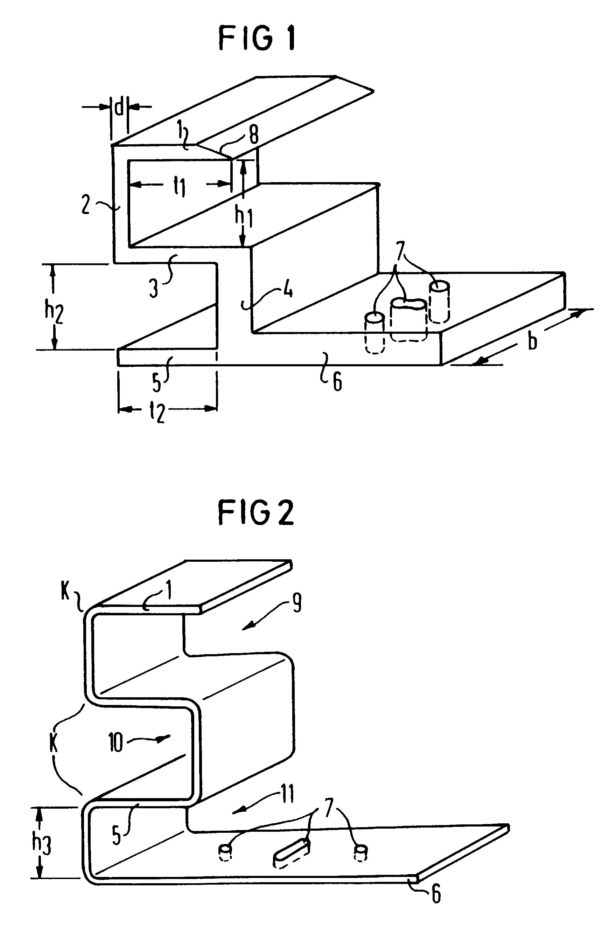

Figur 1 zeigt eine Montageklemme aus stranggepreßtem Aluminium, die in ihren Maßen auf die Befestigung von rahmenlosen Solarmodulen abgestimmt ist. Diese weisen zum Beispiel eine Größe von 1.000 x 500 mm auf und bestehen im Randbereich aus einer als Substrat verwendeten ca. 4 mm starken Glasplatte. Der obere Schenkel 1, der mittlere Schenkel 3 und der untere Schenkel 5 des zweifach U-förmigen Profils liegen in zueinander parallelen Ebenen. Die die Schenkel verbindenden Teile oder Böden der beiden U (2, 4) können diese wie dargestellt rechtwinklig oder auch in Form eines Kreisbogens verbinden. Im letzteren Fall wird aus dem doppelt U-förmigen Profil ein S-förmiges Profil. Besonders vorteilhaft ist die Ausformung der Montageklemme jedoch an die Kantenform der zu befestigenden Körper angepaßt und ist im vorliegenden Fall rechtwinklig, wobei zumindest die innenliegenden Ecken leicht abgerundet sind.

Wichtige Kenngrößen der Montageklemme sind jedoch der lichte Abstand zweier Schenkel h sowie deren am jeweils oberen Schenkel eines U gemessene Tiefe t. Im vorliegenden Fall sind sowohl die Tiefen (t1, t2) sowie die Schenkelabstände h1 und h2 für beide U identisch. Die Höhe h ist auf die Dicke der Körper (hier: Solarmodul) abgestimmt, während die Tiefe t die Einstecktiefe der Körper in die Montageklemme bestimmt.

Zur Befestigung der Montageklemme auf einer Unterlage sind im vorliegenden Fall drei Bohrungen 7 in die Bodenplatte 6 der Montageklemme eingebracht, wobei die mittlere Bohrung einen länglichen Querschnitt aufweist, um ein nachträgliches Ausrichten der Klemme bei der Befestigung zu ermöglichen. Zur Erhöhung der Stabilität können Bodenplatte 6 und Teil 4 gegenüber der Dicke d der übrigen Teile verstärkt sein. Die Kante 8 des oberen Schenkels kann abgeschrägt sein. Im dargestellten speziellen Ausführungsbeispiel weist die Montageklemme folgende in mm angegebenen Maße auf, die jedoch nicht erfindungswesentlich sind und im Rahmen der Erfindung für eine beliebige Anwendung beliebig variiert werden können: h = 8, t = 12, d = 2 und Breite b = 50.

Figur 2 zeigt als Ausführungsbeispiel der Erfindung eine aus Stahlblech gebogene Montageklemme. Wesentlicher Unterschied zur ersten nicht erfindungsgemäßen Ausführung ist, daß die Klemme neben dem oberen U 9 und dem unteren U 10 eine weitere U-förmige Biegung 11 aufweist, bevor der untere Schenkel 5 in die Bodenplatte 6 ausläuft. Herstellungsbedingt weist die Klemme eine überall gleichbleibende Wandstärke d von ca. 1,5 mm sowie abgerundete Kanten K auf. Die übrigen Maße t, h und d können für den gleichen Anwendungszweck entsprechend der Montageklemme der Figur 1 gewählt werden. Der lichte Abstand h3 des unteren Schenkels 5 von der Bodenplatte 6 bestimmt unter Berücksichtigung der Profilstärke d den Abstand eines unteren U zu befestigenden Körpers von der Unterlage.

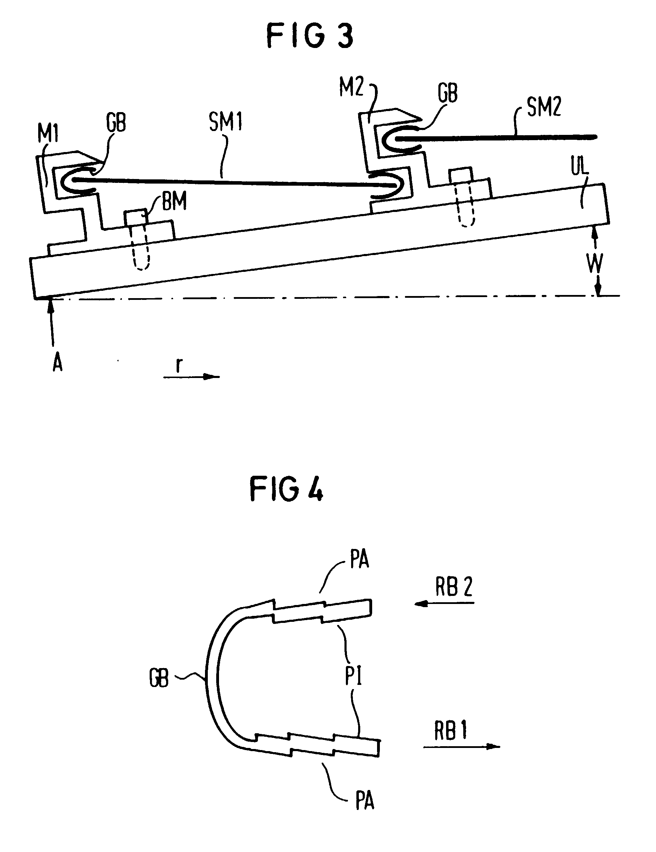

Figur 3 zeigt im schematischen Querschnitt, wie mehrere Solarmodule SM (Körper) in schindelartiger Anordnung auf einer Unterlage UL befestigt werden können. Diese Anordnung ist insbesondere dann von Vorteil, wenn die Unterlage UL gegen die Horizontale geneigt ist und mit dieser einen Winkel W einschließt. Am unteren Ende A der Unterlage wird eine erste Montageklemme M1 mit Hilfe von Befestigungsmitteln BM auf der Unterlage UL befestigt, zum Beispiel festgeschraubt. In das obere U der Klemme M1, welches in Montagerichtung r weist, wird nun die Kante eines ersten Solarmoduls SM1 eingesteckt. Ein um die Kanten gelegtes elastisches Teil, hier ein Gummiband GB, sorgt sowohl für Fixierung des Solarmoduls in der Klemme als auch für eine weiche Lagerung des ansonsten bruchgefährdeten Solarmoduls. Das Gummiband GB schließt vorteilhafterweise bündig mit dem oberen Schenkel des Profils ab. In gleicher Weise wird nun die gegenüberliegende Kante des ersten Solarmoduls SM1 in das untere U einer zweiten Montageklemme M2 eingesteckt und diese in gleicher Weise auf der Unterlage UL befestigt. Wegen der nicht maßstabsgetreuen schematischen Darstellung ist die Neigung des Solarmoduls gegen die Unterlage übertrieben dargestellt.

Ein zweites Solarmodul SM2 wird nun in gleicher Weise mit einer ersten Kante in das obere U der Montageklemme M2 eingesteckt, während die gegenüberliegende zweite Kante im unteren U einer dritten Montageklemme M3 gelagert wird.

In gleicher Weise können weitere Solarmodule mit Hilfe weiterer Montageklemmen auf der Unterlage befestigt werden, bis diese vollständig von Solarmodulen belegt ist.

Figur 4 zeigt ein zum Beispiel als Gummiband ausgebildetes elastisches Teil, welches ein für den angegebenen Zweck besonders vorteilhaftes Profil aufweist. Das entsprechend seiner späteren Lage in der Montageklemme M gebogen dargestellte elastische Teil GB weist in besonders vorteilhafter Weise unterschiedliche Profile für Innen- und Außenseite auf, um einen besonders guten Sitz des Solarmoduls SM in der Klemme M zu gewährleisten. Das äußere Profil PA weist in Richtung RB1 leicht ansteigende und dann steil abfallende Stufen auf, die bei Reibung in der Montageklemme eine Relativbewegung in Richtung RB2 erleichtern, in Richtung RB1 jedoch erschweren. Das innere Profil PI weist die gleichen Stufen jedoch in spiegelverkehrter Anordnung auf. Bei Reibung gegen den dagegendrückenden Körper bzw. ein Solarmodul wird eine Relativbewegung in Richtung RB2 erleichtert, in Richtung RB1 jedoch erschwert. So läßt sich ein Körper mit dem um die Kante gelegten elastischen Teil GB zwar leicht in die Montageklemme M einschieben jedoch nur schwer wieder herausziehen.

## Patentansprüche

1. Montageklemme (M1, M2) zur Befestigung plattenförmiger Körper (SM1, SM2) auf einer flachen Unterlage (UL), die aus einem Stahlblech gebogen ist und ein zweifach U-förmiges Profil aufweist, wobei die beiden U über einer Bodenplatte (6) übereinander angeordnet sind, sich nach entgegengesetzten Seiten öffnen, zur Bodenplatte annäherend parallele Schenkel (1, 3, 5) mit einem gemeinsamen Mittelschenkel (3) aufweisen, die gleiche Höhe (h) und, gemessen am jeweils oberen Schenkel die gleiche Tiefe (t) besitzen, und bei der der unterste Schenkel (5) nach einer weiteren U-förmigen Biegung in die Bodenplatte (6) ausläuft, die zumindest eine Bohrung (7) zur Befestigung auf der Unterlage aufweist.

2. Verwendung der Montageklemme nach Anspruch 1 zur schindelartig überlappenden Befestigung flacher Solarmodule (SM) auf einer Unterlage (UL).

3. Verwendung nach Anspruch 2,
bei der die Solarmodule auf einer zur Horizontalen geneigten Unterlage so befestigt werden, daß die obenliegende Kante vom jeweils darüberliegenden Solarmodul abgedeckt wird.

4. Verwendung nach Anspruch 2 oder 3,
bei dem die Solarmodule in den Montageklemmen durch ein am inneren Umfang der U's anliegendes Gummiband (GB) fixiert werden.

5. Verwendung nach Anspruch 4,
bei dem das Gummiband an seiner Oberfläche ein Profil (PA, PI) aufweist, welches dem Einschieben von Solarmodulen in die Öffnung einen geringen, beim Herausziehen jedoch einen hohen Widerstand entgegensetzt.

## Claims

1. Mounting clamp (M1, M2) for fastening plate-like bodies (SM1, SM2) on a flat base (UL), the said clamp being bent from a steel sheet and having a double U-shaped profile, the two Us being arranged above each other over a baseplate (6), opening on opposite sides, having limbs (1, 3, 5) which are approximately parallel to the baseplate and have a common centre limb (3), having the same height (h) and the same depth (t), measured on the respective upper limb, and in which clamp the lowest limb (5), after a further U-shaped bend, runs out into the baseplate (6), which has at least one hole (7) for fastening on the base.

2. Use of the mounting clamp according to Claim 1, for the shingle-like overlapping fastening of flat solar modules (SM) on a base (UL).

3. Use according to Claim 2, in which the solar modules are fastened on a base which is inclined to the horizontal, the fastening being such that the top edge is covered by the solar module located respectively above it.

4. Use according to Claim 2 or 3, in which the solar modules are fixed in the mounting clamps by a rubber strip (GB) resting on the inner circumference of the US.

5. Use according to Claim 4, in which the rubber strip has on its surface a profile (PA, PI) which opposes the insertion of solar modules into the opening with a low resistance but with a high resistance when the modules are being removed.

## Revendications

1. Pince de montage (M1, M2) pour la fixation de corps (SM1, SM2) ayant la forme d'une plaque sur une base plate (UL), qui est obtenue en pliant une tôle d'acier et a un profil en forme de double U, les deux U étant situés l'un sur l'autre au-dessus d'une plaque de fond (6), s'ouvrant sur des côtés opposés l'un à l'autre, comprenant des branches (1, 3, 5) à peu près parallèles à la plaque de fond avec une branche centrale commune (3), ayant la même hauteur (h) et la même profondeur (t) mesurée au niveau de la branche supérieure respective, et dans laquelle la branche la plus basse (5) se termine, après une autre courbe en forme de U, par la plaque de fond (6), qui est pourvue d'au moins un perçage (7) en vue de la fixation sur la base.

2. Utilisation de la pince de montage selon la revendication 1 pour la fixation sur une base (UL) de modules solaires (SM) plats se chevauchant à la manière de bardeaux.

3. Utilisation selon la revendication 2, dans laquelle les modules solaires sont fixés sur une base inclinée par rapport à l'horizontale, de telle sorte que l'arête située en haut soit couverte, respectivement, par le module solaire placé dessus.

4. Utilisation selon la revendication 2 ou 3, dans laquelle les modules solaires sont fixés dans les pinces de montage par une bande en caoutchouc (GB) contiguë à la périphérie intérieure des U.

5. Utilisation selon la revendication 4, dans laquelle la bande en caoutchouc est pourvue, sur sa surface, d'un profil (PA, PI) qui oppose une faible résistance à l'introduction de modules solaires dans l'ouverture, mais une résistance élevée lors de leur retrait.
